# EUROPEAN PATENT SPECIFICATION

(11) **EP 2 797 427 B1**
(45) Date of publication and mention of the grant of the patent: **28.10.2015**
(21) Application number: 12799543.9
(22) Date of filing: 30.11.2012
(51) Int. Cl.: A23L 1/025, A23L 1/03, A23L 1/22

(54) **FLAVOUR GENERATION DURING MICROWAVE HEATING**
GESCHMACKSERZEUGUNG WÄHREND EINER MIKROWELLENERWÄRMUNG
PRODUCTION DE SAVEUR PENDANT CHAUFFAGE AUX MICRO-ONDES

(30) Priority: 27.12.2011 EP 11195821
(43) Date of publication of application: 05.11.2014
(73) Proprietor: Nestec S.A., 1800 Vevey (CH)
(72) Inventor: RABE, Swen, 78357 Mühlingen (DE); MARTIN, Isabella, 79761 Waldshut-tiengen (DE)
(74) Representative: Dinger, Hansjörg
(86) International application number: PCT/EP2012/074180
(87) International publication number: WO 2013/098043

(56) References cited:
- US-A- 4 992 284
- US-A- 5 178 839

## Description

### TECHNICAL FIELD

This invention relates to the generation of flavours during the microwave cooking of foods. In particular, the invention relates to the preparation of a suspension of a powder in oil where the powder contains certain Maillard and caramelisation reaction precursors and has a water activity optimised for enabling the effectiveness of these flavour generating reactions when exposed to microwave heating.

### BACKGROUND

Microwave ovens have been used for decades for the heating of prepared food dishes. Water molecules are excited by microwaves resulting in energy release and thus induced heat. While microwave heating has important benefits in the kitchen, one significant drawback is that the heating conditions are not conducive to flavour formation. This is primarily because the food is usually in the microwave oven for only a short time, the environment is comparatively diluted with respect to solvents (water, oils etc.) and flavour reaction precursors, and the cooking temperatures are often relatively low compared to conventional cooking methods.

The lack of flavour generation in the microwave oven has lead to the need to pre-flavour ready-to-eat dishes with commercial flavouring ingredients. This can add to costs, and may also lead to a negative consumer perception that the added ingredients are not natural.

Flavour reactions, such as Maillard reactions, occur in a wide variety of food matrices and even at very low temperatures. Reaction kinetics (time) are determined by various factors, such as temperature, water activity of the food matrix, the type and reactivity of reaction precursor compounds, pH, and pressure.

There have been some attempts to overcome the problem of flavour generation in microwave cooking. However, these tend to focus on Maillard reactions in an aqueous environment and with comparatively high levels of precursor compounds (reducing sugars and amino group carrying compounds).

In one example, US 5,053,236 describes Maillard reactions (reducing sugars and amino group carrying compounds) and caramelisation reactions (sugars only) in microwave ovens. However, the disclosed method involves combinations of specific reaction precursors with microwave susceptor materials (e.g. metal layers or liquids). The requirement for a susceptor material, for example glycerol or another polyol, is a significant disadvantage of this methodology. This adds to the ingredient list increasing complexity and costs. Further, compounds such as glycerol are regarded by consumers as non-natural additives and therefore detract from a clean label image.

US 4,992,284 describes the generation or release of aromas from an aroma source under microwave heating, but this approach uses flavoured oils or flavour ingredients obtained commercially from flavour houses. There is no mention of the generation of Maillard reaction or caramelisation reaction type flavours.

US 4,857,340 describes a release system for use in microwave cooking. The system comprises an oil phase or an emulsion which is used as a carrier for a flavour source (e.g. a flavoured oil or a flavour top note obtained commercially), which upon heating releases the aromas during the microwave cooking. This system also employs a susceptor material, without which the release of aroma from the flavour source is limited.

The applicant has now found that microwave heating of a suspension of a powder in oil, where the powder contains certain Maillard and caramelisation reaction precursors and has an optimised water activity is effective for generating desirable flavours.

An object of the invention is therefore to provide a process for flavour generation in microwave heating that at least goes part way to overcoming one or more of the above disadvantages, or at least provides a useful alternative to existing methods.

### SUMMARY OF THE INVENTION

In a first aspect the invention provides a process for generating flavours during the microwave heating of food, comprising:
a) preparing a suspension in oil of a powder comprising one or more compounds having carbonyl and amino groups capable of undergoing a Maillard reaction and/or a caramelisation reaction, the powder having a water activity in the range 0.25 to 0.8; and
b) heating the suspension of powder in oil in a microwave oven for a time sufficient to generate the flavours.

In a second aspect the invention provides a composition for generating flavours during the microwave heating of food, comprising a suspension in oil of a powder comprising one or more compounds having carbonyl and amino groups capable of undergoing a Maillard reaction and/or a caramelisation reaction, the powder having a water activity in the range 0.25 to 0.8.

### BRIEF DESCRIPTION OF THE DRAWINGS

Figure 1 shows colour formation from Maillard and caramelisation reactions during microwave heating of milk powder.
Figure 2 shows colour formation from Maillard reactions during microwave heating of a complex flavour powder.

### DETAILED DESCRIPTION

The invention relates to a process for generating flavours during the microwave heating of food. The process includes the steps of preparing a suspension in oil of a powder comprising one or more compounds having carbonyl and amino groups capable of undergoing a Maillard reaction and/or a caramelisation reaction, and heating the suspension in a microwave oven for a time sufficient to generate the flavours.

Maillard reactions that take place between reducing sugars and amino group carrying molecules, or the caramelisation of sugars, result in the formation of complex non-volatile and volatile flavour molecules, as well as colourants. The invention relates to a system where targeted Maillard and/or caramelisation reactions are achieved in microwave ovens using suspension matrices. The suspension matrices are prepared by suspending a powder in oil.

The powder contains precursor compounds (e.g. reducing sugars and amino group carrying compounds). The powder may be a complex powder, such as milk powder, or may be a simple mix of powdered precursor compounds, such as a mix of xylose and an amino acid (e.g. cysteine). Preferably the powder includes reducing sugars, such as xylose, glucose, lactose, or maltodextrin, and proteins, peptides or amino acids. The powder may additionally comprise a meat extract or a vegetable extract.

The water activity of the powder is in the range 0.25 to 0.8, preferably 0.5 to 0.8. The water content of the powder can be adjusted, by adding or removing water, to optimise the flavour reactions during microwave heating. The water activity is important because Maillard reactions occur most rapidly at intermediate Aw values (0.5 to 0.8). This is because water is produced during a Maillard reaction and so foods having a high water activity (Aw > 0.8) tend to inhibit progress of the reaction. However, at very low water activities (Aw < 0.25) the mobility of reactants is limited and Maillard reactions will not proceed easily. Thus, an intermediate Aw is preferred. Moreover, the water activity can be optimised (by adding or removing water) for any specific combination of reaction precursor compounds within the powder to give the best conditions for flavour compound delivery.

The suspension may be heated for any time appropriate for generating the desired flavours and for cooking the food, but is typically 2 to 5 minutes.

The suspension is preferably heated to a temperature of at least 100 °C, more preferably a temperature in the range 120 °C to 150 °C.

The oil may be any suitable food grade plant or vegetable derived oil including, but not limited to, those selected from the group comprising sunflower seed oil, rapeseed oil, palm oil, cotton seed oil, sesame seed oil, soybean oil, peanut oil, olive oil, corn oil, and safflower oil.

Any compounds may be selected to give the desired flavour in the heated or cooked food. In one embodiment of the invention, the powder includes cysteine in order to generate a chicken flavour.

Microwave heating induces a flavour reaction in the powder particles (which can be thought of as "mini reactors"). During exposure to microwaves (typically for 2-5 min), water molecules are excited, heat is generated and the temperature in the micro-structure of the powder particles increases rapidly. The reaction precursors are partially hydrated and solubilised by the water in the powder particles. The optimised water activity in the powder enables acceleration of reactions between precursor compounds. It is postulated that flavour compounds produced, in particular hydrophobic molecules, partition between the more hydrophilic powder phase and the hydrophobic lipid phase. This shifts the reaction kinetics towards the product side of the reaction equation, further accelerating the reaction. Volatiles and non-volatile taste active compounds are formed.

The invention also relates to a composition for generating flavours during the microwave heating of food, comprising a suspension in oil of a powder comprising one or more compounds having carbonyl and amino groups capable of undergoing a Maillard reaction and/or caramelisation, the powder having a water activity in the range 0.25 to 0.8.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

### EXAMPLES

The invention is further described with reference to the following examples. It will be appreciated that the invention as claimed is not intended to be limited in any way by these examples.

### Example 1: General Method

A reaction substrate in powder form was first equilibrated in a climate chamber to install a water activity of 0.2 in the powder. The powder (0.5 g) was manually mixed into sunflower oil (49.5 g) with vigorous stirring to produce a suspension. The suspension was then transferred to a polyethylene cup and placed in a pre-heated commercial microwave oven. The suspension was heated in the microwave oven for a defined time at 1000 W. The temperature of the suspension was measured immediately after the microwave heating. Temperatures measured were in the range of 120 °C to 150 °C after a heating time of 3 to 5 min. Aroma notes and colour formation were assessed.

### Example 2: Milk Powder

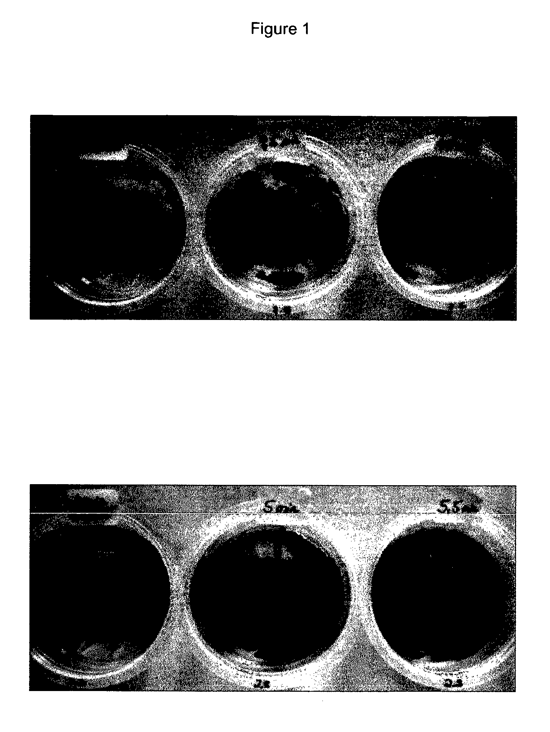

The milk powder used in this example was spray dried milk powder comprising 17 % fat. Several trials were conducted following the procedure of Example 1. The temperature of the sample after different heating times is shown in Table 1. The colour of each sample after heating is shown in Figure 1.

The effect of Maillard reactions and caramelisation was observed for the samples upon microwave oven heating as seen by increased temperatures leading to more intense and darker colour formation and the development of caramel-like aroma notes.

**Table 1**

| **Sample** | **Time (min)** | **Temp. after heating (°C)** |
|---|---|---|
| 1 | 4 | 120 |
| 2 | 4.5 | 120 |
| 3 | 4.75 | 134 |
| 4 | 4.9 | 141 |
| 5 | 5 | 142 |
| 6 | 5.5 | 150 |

### Example 3: Reaction Flavour Powder

The reaction flavour powder used in this example has the composition:

| | |
|---|---|
| Yeast Extract: | 31.0% |
| Hydrolyzed wheat gluten: | 22.0% |
| Cysteine: | 2.0% |
| Dextrose: | 2.25% |
| Fructose: | 2.25% |
| Starch: | 20.5% |
| Maltodextrin: | 20.0% |

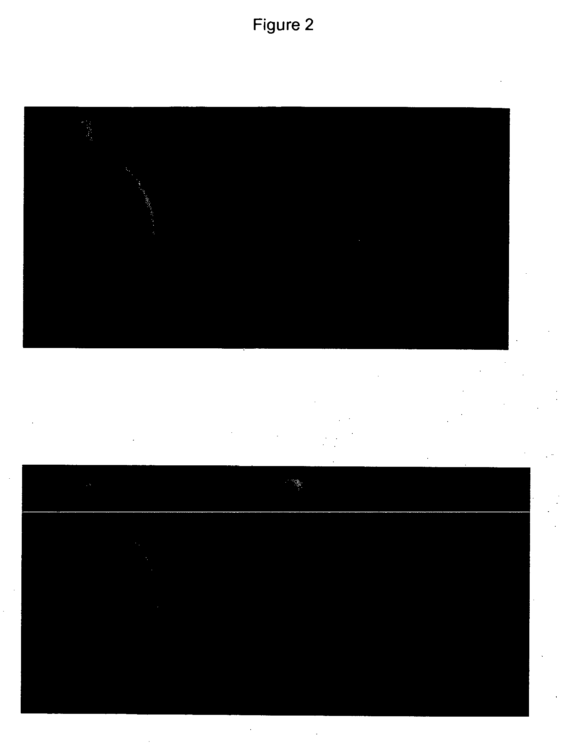

Several trials were conducted following the procedure of Example 1. The temperature of the sample after different heating times is shown in Table 2. The colour of each sample after heating is shown in Figure 2.

The effect of Maillard reactions was observed for the samples upon microwave oven heating as seen by increased temperatures leading to more intense and darker colour formation and the development of meat-like aroma notes.

**Table 2**

| **Sample** | **Time (min)** | **Temp. after heating (°C)** |
|---|---|---|
| 1 | 3 | 99 |
| 2 | 3.5 | 119 |
| 3 | 3.7 | 120 |
| 4 | 3.8 | 130 |
| 5 | 4 | 142 |
| 6 | 4.5 | 150 |

## Claims

1. A process for generating flavours during the microwave heating of food, comprising:
a) preparing a suspension in oil of a powder comprising one or more compounds having carbonyl and amino groups capable of undergoing a Maillard reaction and/or a caramelisation reaction, the powder having a water activity in the range 0.25 to 0.8; and
b) heating the suspension of powder in oil in a microwave oven for a time sufficient to generate the flavours.

2. A process as claimed in claim 1, wherein the compounds of the powder include reducing sugars, such as xylose, glucose, lactose, or maltodextrin, and proteins, peptides or amino acids.

3. A process as claimed in claim 1 or claim 2, wherein the powder additionally comprises a meat extract or a vegetable extract.

4. A process as claimed in any one of claims 1 to 3, wherein the water activity of the powder is modified by the addition or removal of water.

5. A process as claimed in any one of claims 1 to 4, wherein the water activity of the powder is in the range 0.5 to 0.8.

6. A process as claimed in any one of claims 1 to 5, wherein the oil is selected from the group comprising sunflower seed oil, rapeseed oil, palm oil, cotton seed oil, sesame seed oil, soybean oil, peanut oil, olive oil, com oil, and safflower oil.

7. A process as claimed in any one of claims 1 to 6, wherein the suspension is heated for 2 to 5 minutes.

8. A process as claimed in any one of claims 1 to 7, wherein the suspension is heated to a temperature of at least 100 °C, preferably a temperature in the range 120 °C to 150 °C.

9. A process as claimed in any one of claims 1 to 8, wherein the powder includes cysteine in order to generate a chicken flavour.

10. A composition for generating flavours during the microwave heating of food, comprising a suspension in oil of a powder comprising one or more compounds having carbonyl and amino groups capable of undergoing a Maillard reaction and/or a caramelisation reaction, the powder having a water activity in the range 0.25 to 0.8.

## Patentansprüche

1. Verfahren zur Geschmackserzeugung während der Mikrowellenerwärmung von Lebensmitteln, aufweisend:
a) das Herstellen einer öligen Suspension eines Pulvers mit einem oder mehreren Bestandteilen, die Carbonyl- und Aminogruppen aufweisen, welche eine Maillard-Reaktion und/oder eine Karamelisationsreaktion durchlaufen können, wobei das Pulver eine Wasseraktivität in dem Bereich von 0,25 bis 0,8 hat; und
b) das Erwärmen der öligen Suspension des Pulvers in einem Mikrowellenofen für einen Zeitraum, der ausreicht, um den Geschmack zu erzeugen.

2. Verfahren nach Anspruch 1, wobei die Bestandteile des Pulvers reduzierende Zucker aufweisen wie Xylose, Glucose, Lactose oder Maltodextrin, und Proteine, Peptide oder Aminosäuren.

3. Verfahren nach Anspruch 1 oder 2, wobei das Pulver zusätzlich einen Fleischextrakt oder einen Pflanzenextrakt aufweist.

4. Verfahren nach einem der Ansprüche 1 bis 3, wobei die Wasseraktivität des Pulvers durch die Zugabe oder Entziehung von Wasser modifiziert wird.

5. Verfahren nach einem der Ansprüche 1 bis 4, wobei die Wasseraktivität des Pulvers in dem Bereich von 0,5 bis 0,8 liegt.

6. Verfahren nach einem der Ansprüche 1 bis 5, wobei das Öl aus der Gruppe ausgewählt ist, aufweisend Sonnenblumenkernöl, Rapsöl, Palmöl, Baumwollsamenöl, Sesamöl, Sojabohnenöl, Erdnussöl, Olivenöl, Maiskeimöl und Safloröl.

7. Verfahren nach einem der Ansprüche 1 bis 6, wobei die Suspension für 2 bis 5 Minuten erwärmt wird.

8. Verfahren nach einem der Ansprüche 1 bis 7, wobei die Suspension auf eine Temperatur von mindestens 100°C, vorzugsweise eine Temperatur in dem Bereich von 120°C bis 150°C, erwärmt wird.

9. Verfahren nach einem der Ansprüche 1 bis 8, wobei das Pulver Cystein aufweist, um Geflügel-Geschmack zu erzeugen.

10. Zusammensetzung zur Geschmackserzeugung während der Mikrowellenerwärmung von Lebensmitteln, aufweisend eine ölige Suspension eines Pulvers mit einem oder mehreren Bestandteilen, die Carbonyl- und Aminogruppen aufweisen, welche eine Maillard-Reaktion und/oder eine Karamelisationsreaktion durchlaufen können, wobei das Pulver eine Wasseraktivität in dem Bereich von 0,25 bis 0,8 hat.

## Revendications

1. Procédé destiné à générer des arômes au cours du chauffage par micro-ondes de nourriture, comprenant :
a) une préparation d'une suspension dans de l'huile d'une poudre comprenant un ou plusieurs composés ayant des groupes carbonyle et amino aptes à subir une réaction de Maillard et/ou une réaction de caramélisation, la poudre ayant une activité de l'eau dans la plage de 0,25 à 0,8 ; et
b) un chauffage de la suspension de poudre dans de l'huile dans un four à micro-ondes pendant un temps suffisant pour générer les arômes.

2. Procédé selon la revendication 1, dans lequel les composés de la poudre comprennent des sucres réducteurs, comme par exemple le xylose, le glucose, le lactose, ou la maltodextrine, et des protéines, peptides ou acides aminés.

3. Procédé selon la revendication 1 ou la revendication 2, dans lequel la poudre comprend en outre un extrait de viande ou un extrait végétal.

4. Procédé selon l'une quelconque des revendications 1 à 3, dans lequel l'activité de l'eau de la poudre est modifiée par l'ajout ou le retrait d'eau.

5. Procédé selon l'une quelconque des revendications 1 à 4, dans lequel l'activité de l'eau de la poudre est dans la plage de 0,5 à 0,8.

6. Procédé selon l'une quelconque des revendications 1 à 5, dans lequel l'huile est choisie parmi le groupe comprenant l'huile de graine de tournesol, l'huile de colza, l'huile de palme, l'huile de graine de coton, l'huile de graine de sésame, l'huile de soja, l'huile d'arachide, l'huile d'olive, l'huile de maïs et l'huile de carthame.

7. Procédé selon l'une quelconque des revendications 1 à 6, dans lequel la suspension est chauffée pendant 2 à 5 minutes.

8. Procédé selon l'une quelconque des revendications 1 à 7, dans lequel la suspension est chauffée à une température d'au moins 100 °C, de préférence à une température dans la plage de 120 °C à 150 °C.

9. Procédé selon l'une quelconque des revendications 1 à 8, dans lequel la poudre comprend de la cystéine afin de générer un arôme de poulet.

10. Composition destinée à générer des arômes au cours du chauffage par micro-ondes de nourriture, comprenant une suspension dans de l'huile d'une poudre comprenant un ou plusieurs composés ayant des groupes carbonyle et amino aptes à subir une réaction de Maillard et/ou une réaction de caramélisation, la poudre ayant une activité de l'eau comprise dans la plage de 0,25 à 0,8.
